# EUROPEAN PATENT APPLICATION

(11) **EP 1 686 163 A2**
(43) Date of publication of application: **02.08.2006**
(21) Application number: 06001598.9
(22) Date of filing: 26.01.2006
(51) Int. Cl.: C09J 153/00, C08F 293/00, A61K 9/70, C08F 297/02

(54) **Solution of pressure sensitive adhesives based on acrylic block copolymers**

(30) Priority: 01.02.2005 US 47924
(71) Applicant: National Starch and Chemical Investment Holding Corporation, New Castle, Delaware 19720 (US)
(72) Inventor: Paul, Charles, W., Madison New Jersey 07940 (US); Meisner, Cynthia, L., Somerville New Jersey 08676 (US)
(74) Representative: Held, Stephan

(57) **Abstract**

High performance pressure sensitive adhesives are obtained using acrylic block copolymers. These adhesives can be applied from solvent at very high solids and with high levels of enhancer.

## Description

### FIELD OF THE INVENTION

The invention relates to high performance adhesives comprising acrylic block copolymers.

### BACKGROUND OF THE INVENTION

Typical solution acrylic pressure sensitive adhesive formulations are copolymers of alkyl ester monomers and a functional monomer such as acrylic acid. These adhesives, however, are generally low in adhesion. While such adhesives are conventionally formulated with low levels of tackifiers (5-30%) to improve their tack and peel, tackification results in loss of heat resistance and poor aging properties. To improve shear, a crosslinker is usually added to the acrylic polymer in solution. Upon casting and drying the solution a crosslinked adhesive coating is formed. These random chemical crosslinks have several disadvantages. First, high molecular weight polymers are required to obtain high shear and thus the solvent level must be very high to obtain the desired low viscosity. Second, the reactive sites for crosslinking are a detriment to the use of the adhesives for transdermal drug delivery applications, since many drugs contain polar groups which can react with these sites, or these reactive sites can otherwise inhibit the drug's desired migration from the adhesive. Third, with conventional solution acrylics it is not possible to add high levels of "enhancers" to the adhesive solution without substantially damaging the final adhesive properties (peel and shear).

There exists a need in the art for adhesive solutions based on block acrylic polymers that overcome the above-described limitations. The current invention addresses such need.

### SUMMARY OF THE INVENTION

The invention provides solution based adhesives that can be obtained with high solids loading, high enhancer loads, and/or high peel and shear properties without polar reactive groups.

One aspect of the invention is directed to solution adhesives comprising an acrylic block copolymer, more particularly to solutions of pressure sensitive adhesive in an organic solvent. In one preferred embodiment, the acrylic block copolymer is present in the adhesive in amounts of less than about 50 % by weight based on the total weight of the adhesive. The adhesive of the invention will also preferably contain a tackifier and/or diluent. A preferred diluent for use in the practice of the invention is, for example, polypropylene glycol. A preferred solvent for use in the practice of the invention is, for example ethyl acetate.

Block copolymers that may be used in the practice of the invention will generally be multiblock polymers wherein at least about 50 weight % of the polymer comprises at least 2 hard blocks per molecule. Examples of block copolymers include those having the formula -A-B-A-, (A-B)ₙ- or (AB)ₙ-X, wherein X is a multivalent coupling agent with functionality of two or more, polymer blocks A are non-elastomeric (Tg>30°C), polymer blocks B are elastomeric (Tg< about 20°C) and variable "n" is an integer equal to, or greater than, one. Particularly preferred are block copolymers of the formula -[A1]-[B]-[A2]-, in which A1 and A2 each represents a polymer block having a glass transition temperature (Tg) of greater than about 30°C (also referred to as a hard block) and B represents a polymer block having a Tg of less than about 20°C (also referred to as a soft block)
Polymer block B will preferably be present in amounts of at least 50 weight %. In a particularly preferred embodiment, A1 and A2 is methyl methacrylate and B is n-butyl acrylate.

Another aspect of the invention is directed to a process for bonding a substrate to a similar or dissimilar substrate using the solution pressure sensitive adhesive described herein.

Still another aspect of the invention provides articles of manufacture comprising the adhesive. The properties of the adhesive makes it particularly useful in the manufacture of industrial tapes, in medical applications (e.g., for dermal applications), in nonwoven applications, and as an adhesive for transdermal drug delivery. Adhesive tapes, sticking plasters and the like are manufactured by coating films or paper with the polymer solution of the invention and then, subsequently, removing the solvent by drying or the like.

### BRIEF DESCRIPTION OF THE DRAWING FIGURES

Figure 1 shows the dynamic mechanical properties of adhesives of the invention, as further described in Example 1 (Δ) and in Example 3 (0), and the adhesive described in Comparative Example 1 (□).
Figure 2 shows the dynamic mechanical properties of adhesives of the invention, as further described in Example 2 (□) and the adhesive described in Comparative Example 2 (Δ).

### DETAILED DESCRIPTION OF THE INVENTION

All references cited herein are incorporated in their entireties by reference.

It has now been discovered that formulated adhesives with high shear, aggressive tack and peel can be obtained using acrylic block copolymers. The acrylic block copolymers are formulated with different types and amounts of tackifiers and/or diluents to obtain adhesives having properties required for a desired end use.

The adhesives of the invention exhibit unique features that make them useful for a variety of applications. Some of these features are high heat resistance, high solids content, high polarity for good adhesion to polar surfaces, high moisture vapor transmission rate and good weatherability. These features make the adhesives of the invention well suited as adhesives for medical (breathability) and industrial applications (polar surface adhesion and resistance to heat, plasticizers and weathering), as positioning adhesives (e.g., for sanitary napkins) that are breathable, non-staining, and transfer resistant, as bottle labeling adhesives with very low application temperatures and excellent clarity, as elastic attachment adhesives with high creep resistance and spandex adhesion, and as transdermal or dermal delivery adhesives which can tolerate high levels of enhancer.

Adhesives having high levels of grab and tack, well beyond those of prior art solution acrylics, may be obtained when low polymer levels are used. Low levels of acrylic block copolymers means amounts of less than about 50% by weight based on the total weight of the adhesive composition. The block copolymer component will preferably be present at levels of less than 50% by weight of the adhesive composition, more typically at levels of less than about 40% by weight, most preferably at levels of from about 20 to about 35% by weight.

Acrylic polymer, as used herein, is intended to include those polymers that contain at least one α-β ethylenically unsaturated acidic monomer containing one or more carboxylic groups. Block copolymers that may be used in the practice of the invention will generally be multiblock polymers wherein at least about 50 weight % of the polymer comprise at least 2 hard blocks per molecule. Examples of block copolymers include those having the formula -A-B-A-, (A-B)ₙ- or (AB)ₙ-X, wherein X is a multivalent coupling agent with functionality of two or more, polymer blocks A are non-elastomeric (Tg>30°C), polymer blocks B are elastomeric (Tg< about 20°C), and variable "n" is an integer equal to, or greater than, one. Examples of multivalent coupling agents, "X", include dibromoethane with functionality of 2; trisnonylphenyl phosphite and trichloromethylsilane, both with functionality of 3; and tetrachlorosilane with functionality of 4.

Particularly preferred are block copolymers of the formula -[A1]-[B]-[A2]- wherein A1 and A2 each represents a polymer block having a glass transition temperature (Tg) of greater than about 30°C, preferably greater than 80°C, most preferably greater than 110°C, as determined by differential scanning calorimetry (DSC), B represents a polymer block having a Tg of less than about 20°C, preferably less than 0°C, most preferably less than -20°C as determined by DSC.

Copolymers useful in the present invention may be linear or radial. With radial copolymers, the functionality of X is three or more. Some level of diblock copolymer, AB, may be present by design or due to incomplete coupling of the AB arms. Diblock is beneficial for increasing tack, peel and open time, but this must be counter balanced with its effect of lowering cohesive strength. Diblock levels will in general be below about 50 weight %, preferably below 30 weight % of the total polymer.

The Tg of the acrylic blocks can be determined by differential scanning calorimetry (DSC) conducted at a heating rate of 20.0°C /minute with 5 mg or smaller samples. The Tg is calculated as the midpoint between the onset and endpoint of heat flow change corresponding to the glass transition on the DSC heat capacity heating curve. The use of DSC to determine Tg is well known in the art, and is described by B. Cassel and M. P. DiVito in "Use of DSC To Obtain Accurate Thermodynamic and Kinetic Data", American Laboratory, January 1994, pp 14-19, and by B. Wunderlich in Thermal Analysis, Academic Press, Inc., 1990.

Suitable A1 and A2 polymer blocks include polymers or copolymers derived from acrylic or methacrylic acid alkyl ester monomers such as methyl methacrylate, ethyl methacrylate, n-propyl methacrylate, isobutyl methacrylate, isobornyl acrylate, isobornyl methacrylate, isobutyl methacrylate, t-butyl methacrylate, cyclohexyl methacrylate and combinations thereof.

Suitable B polymer blocks include polymers or copolymers derived from acrylic or methacrylic acid alkyl ester monomers such as methyl acrylate, ethyl acrylate, n-propyl acrylate, isobutyl acrylate, n-butyl acrylate, n-propyl acrylate, sec-butyl acrylate, t-butyl acrylate, amyl acrylate , isoamyl acrylate, n-hexyl acrylate, 2-ethylhexyl acrylate, lauryl acrylate, iso-octyl acrylate, decyl methylacrylate and combinations thereof.

It is understood that the same acrylic monomers may be included in both the hard and soft blocks, and that one or more other copolymerizable monomers may be used in the preparation of the polymeric blocks. Copolymerizable olefinic monomers include but are not limited to, acrylic acid, methacrylic acid, vinyl esters, vinyl ethers, styrene monomers, and acrylamides and methacrylamides. Other olefinic comonomers may be present in amounts of up to about 25% of each block, preferably less than 10%, provided they do not interrupt the clean phase separation between the hard and soft blocks upon cooling.

Depending on the application, it may be desirable to add 1-10% of adhesion promoting comonomers, preferably to the soft B block, examples of which include acrylic acid, N-vinyl-2-pyrrolidone, acrylamide, and hydroxy ethyl acrylate.

Polymer block B will preferably be present in amounts of at least 50 weight % of the total polymer. In a particularly preferred embodiment, A1 and A2 are methyl methacrylate and B is n-butyl acrylate.

Methods of preparing acrylic block copolymers are known in the art. Block copolymers for use in the practice of the invention may be made by anionic polymerization as described in Japanese Kokai 11-30222617, by free radical polymerization as described by P. Mancinelli, Materiaux et Techniques, March-April 1990, pp. 41-46, by polyfunctional chain transfer agents such as described by in U.S. Patent No. 5,679,762, by iniferter polymerization as described in EP 0 349 270 B1 and/or by free radical retrograde precipitation, as described in copending commonly assigned U.S. application publication No. 20030149195. Particularly preferred are acrylic block copolymers prepared by anionic polymerization.

Solvents used to prepare the adhesive compositions of the invention are those commonly used for solvent based adhesives such as ethyl acetate, toluene, isopropanol, cyclohexane and the like. Depending on the adhesive formulation, a blend of solvents may be employed. The amount of solvent used is the minimum required to obtain the required viscosity for processing the adhesive solution, typically 100 to 10,000 cP using conventional processes.

As used herein, "adhesive solution" or "pressure sensitive adhesive solution" refers to a solution of a pressure sensitive adhesive in an organic solvent. Articles of manufacture such as adhesive tapes, sticking plasters and the like are manufactured by coating a film, paper or other backing substrate with the polymer solution of the invention and then, subsequently, removing the solvent by drying or the like.

It has been discovered that adhesives with excellent peel and shear can be obtained using block acrylics, while employing very low levels of solvent. Preferred solid levels are greater than 40%, preferably greater than 50%, more preferably greater than 60% and most preferred above 70%.

In addition to the acrylic block copolymers, or blends thereof, the adhesive compositions of the invention will comprise a compatible tackifier and/or diluent. The block copolymer, tackifier and diluent will be selected and used in amounts effective to produce the desired properties required for the intended end use.

Tackifying resins useful in the adhesive compositions of this invention include hydrocarbon resins, synthetic polyterpenes, rosin esters, natural terpenes, and the like. The tackifying agent will generally be present at a level of greater than about 30% by weight of the adhesive composition and preferably at a level of from about 35% by weight to about 80% by weight.

More particularly, and depending upon the particular base polymer, the useful tackifying resins may include any compatible resins or mixtures thereof such as natural and modified rosins including, for example, gum rosin, wood rosin, tall oil rosin, distilled rosin, hydrogenated rosin, dimerized rosin, and polymerized rosin; glycerol and pentaerythritol esters of natural and modified rosins, including, for example the glycerol ester of pale, wood rosin, the glycerol ester of hydrogenated rosin, the glycerol ester of polymerized rosin, the pentaerythritol ester of hydrogenated rosin, and the phenolic-modified pentaerythritol ester of rosin; copolymers and terpolymers of natural terpenes, including, for example, styrene/terpene and alpha methyl styrene/terpene; polyterpene resins having a softening point, as determined by ASTM method E28-58T, of from about 80°C to 150°C; phenolic modified terpene resins and hydrogenated derivatives thereof including, for example, the resin product resulting from the condensation, in an acidic medium, of a bicyclic terpene and a phenol; aliphatic petroleum hydrocarbon resins having a Ball and Ring softening point of from about 70°C to 135°C; aromatic petroleum hydrocarbon resins and the hydrogenated derivatives thereof; and alicyclic petroleum hydrocarbon resins and the hydrogenated derivatives thereof. Mixtures of two or more of the above described tackifying resins may be required for some formulations. Also included are the cyclic or acyclic C₅ resins and aromatic modified acyclic or cyclic resins.

Also useful are resins that are substantially aromatic. Examples of such resins can be prepared from any substantially aromatic monomers having a polymerizable unsaturated group. Typical examples of such aromatic monomers include the styrenic monomers, styrene, alphamethyl styrene, vinyl toluene, methoxy styrene, tertiary butyl styrene, chlorostyrene, etc., indene monomers including indene, and methyl indene.

Various plasticizing agents or diluents may also be present in the composition in amounts of up to about 50% by weight, preferably in amounts of from about 10 to about 45% by weight of the adhesive composition. Suitable diluents will preferably be primarily compatible with the soft (B) block of the acrylic block copolymer. Diluents are liquid or semi-solid materials with a Tg, as determined by DSC, below room temperature. These include plasticizing or extending oils and liquid tackifiers. Liquid tackifiers include rosin derivatives such as rosin alcohol, the methyl ester of rosin and the rosin ester formed by esterifying diethylene glycol with rosin. Other examples are low molecular weight hydrocarbon resins such as Wingtack 10, available from Goodyear, and Esorez 2520 available from Exxon Chemical. Liquid, low molecular weight, low Tg acrylic polymers can also be used, such as poly(n-butyl acrylate).

Suitable plasticizing or extending oils include vegetable and animal oils and their derivatives, and petroleum derived oils.

Other suitable diluents include aliphatic esters such as phthalic acid esters, adipic acid esters, sebacid acid esters and azelaic acid esters, paraffins such as chlorinated paraffin, and polyalkylene glycols such as polyethylene glycol, polypropylene glycol and polytetramethylene glycol as well as their random or block copolymers. Phthalic acid esters such as dibutyl phthalate, di-n-decyl phthalate, bis-2-ethyhexyl phthalate and diisodecyl phthalate, polypropylene glycol, poly(n-butyl acrylate), and ditridecyl adipate are particularly preferred diluents for use in the practice of the invention.

An antioxidant or stabilizer may also be included in the adhesive compositions described herein in amounts of up to about 3% by weight, more typically in amounts of about 0.5%. Among the stabilizers or antioxidants useful herein are the hindered phenols or hindered phenols in combination with a secondary antioxidant such as distearyl thiodipropionate ("DSTDP") or dilauryl thio-dipropionate ("DLTDP"). Representative antioxidants include: 1,3,5-trimethyl 2,4,6-tris (3,5-di-tert-butyl-4-hydroxybenzyl)benzene; pentaerythrityl tetrakis-3(3,5-ditert-butyl-4-hydroxyphenyl)propionate; pentaerythritol tetrakis (3-lauryl thiodipropionate); n-octadecyl-3,5-di-tert-butyl-4-hydroxyphenol)-propionate; 4,4'-methylenebis (2,6-tertbutylphenol); 4,4'-thiobis (6-tert-butyl-o-cresol); 2,6-ditertbutylphenol; 6-(4-hydroxyphenoxy)-2,4-bis(n-octyl-thio)-1,3,5-triazine; di-n-octadecyl 3,5-di-tert-butyl-4-hydroxybenzyl-phosphonate; 2-(n-octylthio)ethyl 3,5-di-tert-butyl-4-hydroxy-benzoate; and sorbitol hexa[3-(3,5-di-tert-butyl-4-hydroxyphenyl)-propionate]. Preferred are IRGAFOS 168, a secondary antioxidant available from Ciba and IRGANOX 1010, a hindered phenol primary antioxidant available from Ciba-Geigy. Other antioxidants include ETHANOX 330, a hindered phenol from Albermarle; SANTOVAR, a 2,5 ditert-amyl hydroquinone from Monsanto; and NAUAGARD P a tris (p-nonylphenyl)phosphite from Uniroyal.

Other additives conventionally used in adhesives to satisfy different properties and meet specific application requirements also may be added to the adhesive composition of this invention. Such additives include, for example, fillers, pigments, flow modifiers, dyestuffs, which may be incorporated in minor or larger amounts into the adhesive formulation, depending on the purpose.

For adhesives used in the transdermal delivery of drugs (i.e. transdermal drug delivery devices or patches), enhancer(s) may be added to improve the drug flux through the skin of the wearer. The enhancer is typically a liquid. It may be used to replace some or all of the diluent while maintaining adhesive properties. Typical enhancers that can be employed include fatty alcohols such as oleyl alcohol, fatty acids such as oleic acid, fatty salts such as sodium lauryl sulfate, fatty esters such as ethyl palmitate, lauryl lactate, and isopropyl myristate. Other common enhancers, such as N-dodecyl-2-pyrrolidone and N,N-diethyl-m-toluamide, can be employed provided they do not destroy the phase separation between the hard end blocks and the soft mid-blocks, or reduce the Tg of the hard phase substantially so as to forfeit adequate heat resistance.

Enhancers may also be added to skin delivery patches (also referred to herein as dermal delivery patches or devices). Here the active is being delivered to, rather than through, the skin. The active could be a pharmaceutical or cosmeceutical (such as an anti-wrinkle agent). Cosmeceuticals are generally regarded as being products that possess both cosmetic and pharmaceutical properties. Examples of cosmeceutical agents include, but are not limited to, benzoyl peroxide and retinol.

The pressure sensitive adhesives of the invention may advantageously be used in the manufacture of adhesive articles including, but not limited to, industrial tapes and transfer films. The adhesive articles are useful over a wide temperature range, have improved UV resistance and adhere to a wide variety of substrates, including low energy surfaces, such as polyolefins, e.g., polyethylene and polypropylene, polyvinyl fluoride, ethylene vinyl acetate, acetal, polystyrene, powder-coated paints, and the like. Single and double face tapes, as well as supported and unsupported free films are encompassed by the invention. Also included, without limitation, are labels, decals, name plates, decorative and reflective materials, reclosable fasteners, theft prevention and anti-counterfeit devices, transdermal drug-delivery patches, dermal patches for delivery of skin actives or providing a skin care function or the treatment of a skin irritation, infection or disease. Adhesives may also be formulated for bonding a label to a container such as a bottle. Encompassed are articles comprising a label, wherein the label is attached to the article by the adhesive described herein.

The invention provides a method for bonding a first substrate to a second substrate. In one embodiment the method comprises applying to a surface of at least one of a first and/or second substrate the adhesive composition of the invention. In bottle labeling applications the first substrate is a label and said second substrate is a container.

The adhesive may be advantageously formulated for use in, for example, medical applications, transdermal or dermal drug or cosmeceutical delivery applications, for industrial applications, positioning adhesives for sanitary napkins, bottle labeling adhesives, and elastic attachment adhesives.

In one embodiment, the adhesive article comprises an adhesive coated on at least one major surface of a backing having a first and second major surface. Useful backing substrates include, but are not limited to foam, metal, fabric, paper and various polymer films such as polypropylene, polyamide and polyester. The adhesive may be present on one or both surfaces of the backing. When the adhesive is coated on both surfaces of the backing, the adhesive on each surface can be the same or different.

Adhesives may also be formulated that are especially well suited for application to the skin, including formulations used in transdermal and dermal drug delivery applications. Adhesives articles are provided that have good skin adhesion and that leave less adhesive residue on the skin. Pressure sensitive adhesive articles encompassed by the invention include, for example, ostomy seals, adhesive tapes and bandages, wound drainage adhesive seals, wound dressings, as adherents for other products and the like that adhere to human skin and remain adherent even in a moist environment.

One embodiment is directed to transdermal and dermal devices (also variously referred to herein as systems or patches), including transdermal and dermal drug delivery systems. Encompassed are dermal patches which may be used to modify properties of the skin. Such patches typically comprise a backing layer and an adhesive layer and may also, optionally, include a therapeutic agent. Such dermal patches may be used, for example, to reduce loss of moisture from the skin. Transdermal and dermal drug delivery systems comprise an adhesive layer, a therapeutic agent and a backing layer. In one embodiment, the drug delivery system also comprises a release layer. In another embodiment of the drug delivery system the drug to be delivered is incorporated into the adhesive.

The adhesives are useful for delivering substances through the skin (transdermal) or delivering substances to the skin (dermal). The delivery process may be aided by including an enhancer in the adhesive composition. It has been discovered that numerous common enhancers are compatible with adhesives based on these block acrylics. Examples include: isopropyl myristate, oleic acid, lauryl lactate, ethyl palmitate, and ethyl oleate. These materials are compatible with the mid-block of the adhesive and do not destroy the phase separation of the block copolymer, when properly formulated. The level of enhancer in the final solid adhesive can be very high, while maintaining good pressure sensitive adhesive properties. The higher the enhancer level, the more rapid the delivery of the drug or other active. Enhancer levels of at least 5% are preferred, more preferable at least 10%, and most preferably at least 15%.

The adhesive of the invention is particularly well-suited for use in drug delivery applications. The pressure sensitive adhesive of the invention may be incorporated into a dermal drug delivery device designed to deliver a therapeutically effective amount of a product to the skin of a patient, e.g., to cure a skin irritation, or may be incorporated into a transdermal drug delivery device designed to deliver a therapeutically effective amount of drug across the skin of a patient. The terms transdermal and dermal refer to the use of the skin as a portal for the administration of drugs by topical application. In dermal applications, the topically applied drug acts locally, i.e., at the surface or within the skin, such as, for example, a blemish patch used to treat acne. In transdermal applications the topical administration of a drug acts systemically by diffusing through the skin and entering the blood stream.

The adhesive of the invention is contemplated for use in the manufacture of liquid reservoir patches and matrix patches.

Transdermal and dermal drug delivery devices of the invention comprise a carrier (such as liquid, gel, or solid matrix, or a pressure sensitive adhesive) into which the drug to be delivered is incorporated, a distal backing layer and a proximal release layer. When the patient peels the release liner from the adhesive and applies the patch, the drug partitions into the stratum corneum (outer skin layer) and permeates through the epidermis and dermis.

Backings which can be used in the practice of this invention include, with or without modification, metal foils, metalized polyfoils, composite foils or films containing polytetrafluoroethylene (TEFLONⓇ)-type materials or equivalents thereof, polyether block amide copolymers, polyurethanes, polyvinylidene chloride, nylon, silicone elastomers, polyisobutylene, styrene-butadiene and styrene-isoprene copolymers, polyethylene, polyester, and other such materials used in the art of transdermal drug delivery. Particularly preferred are thermoplastic polymers such as polyolefins, for example polyethylene and polypropylene, and polyesters such as polyethyleneterephthalate.

The term "drug" is used herein to mean any agent which is intended to produce some therapeutic benefit. The agent may or may not be pharmaceutically active, but will be "bioactive" in the sense that it has an effect on the human body. The agent may be used to treat or alter a condition, which may or may not be a pathological, i.e., a disease state. "Drug", "bioactive agent," "preparation," "cosmeceutical agent," "medicament," "therapeutic agent," "physiological agent" and "pharmaceutical agent" are used interchangeably herein and include substances for use in the diagnosis, cure, mitigation, arrest, treatment or prevention of a condition or disease state or to affect the structure or function of the body. Skin-wellness agents that function to e.g., soften and moisturize are included in this term. The term "treatment" is used broadly to encompass prevention, alteration, cure and control of the condition.

The drug is present in a drug delivery device of the invention in a therapeutically effective amount, i.e., an amount effective to bring about a desired therapeutic result in the treatment of a condition to which the preparation of this invention is to be applied. Effective amount of a drug means a nontoxic but sufficient amount of a drug to provide the selected effect over a specific period of time. The amount that constitutes a therapeutically effective amount varies according to the particular drug incorporated in the device, the condition being treated, any drugs being co-administered with the selected drug, desired duration of treatment, the surface area of the skin over which the device is to be placed, and other components of the drug delivery device. Such an amount is readily determinable by the skilled practitioner.

Treatment areas where the delivery device of the invention finds use, and examples of pharmaceutical products which can be incorporated in the devices of the invention, include treatment for incontinence (oxybutinin), central nervous system conditions (methylphenidate), hormone therapy and birth control (estradiol, testosterone, progestin, progesterone, levonorgestrel) cardiovascular (nitroglycerin, clonidine) and cardiotonics (e.g., digitalis, digoxin), pain management or anti-inflammatory (fentanyl, lidocaine, diclofenac, flurbiprofen), cosmetic (benzoyl peroxide, salicylic acid, vitamin C, vitamin E, aromatic oils), antinauseants (scopalamine), smoking cessation (nicotine), antiinflammatory conditions, both steroidal (e.g., hydrocortisone, prednisolone, triamcinolone) and nonsteroidal (e.g., naproxen, piroxicam) treatments, antibacterials (e.g., penicillins such as penicillin V, cephalosporins such as cephalexin, erythromycin, tetracycline, gentamycin, sulfathiazole, nitrofurantoin, and quinolones such as norfloxacin, flumequine, and ibafloxacin), antiprotazoals (e.g., metronidazole), antifungals (e.g. nystatin), calcium channel blockers (e.g. nifedipine, diltiazem), bronchodilators (e.g., theophylline, pirbuterol, salmeterol, isoproterenol), enzyme inhibitors such as collagenase inhibitors, protease inhibitors, elastase inhibitors, lipoxygenase inhibitors, and angiotensin converting enzyme inhibitors (e.g., captopril, lisinopril), other antihypertensives (e.g., propranolol), leukotriene antagonists, anti-ulceratives such as H2 antagonists, antivirals and/or immunomodulators (e.g., 1-isobutyl-1H-imidazo[4,5-c]quinolin-4-amine, 1-(2-hydroxy-2-methyl-propyl)-1 H-imidazo[4,5-c]quinoline-4-amine, and acyclovir), local anesthetics (e.g., benzocaine, propofol), antitussives (e.g., codeine, dextromethorphan), antihistamines (e.g., diphenhydramine, chlorpheniramine, terfenadine), narcotic analgesics (e.g., morphine, fentanyl), cardioactive products such as atriopeptides, anticonvulsants (e.g., carbamazine), immunosuppressives (e.g., cyclosporine), psychotherapeutics (e.g., diazepam), sedatives (e.g., phenobarbital), anticoagulants (e.g., heparin), analgesics (e.g., acetaminophen), antimigraine agents (e.g., ergotamine, melatonin, sumatriptan), antiarrhythmic agents (e.g., flecainide), antiemetics (e.g., metaclopromide, ondansetron), anticancer agents (e.g., methotrexate), neurologic agents such as anxiolytic drugs, hemostatics, anti-obesity agents, and the like, as well as pharmaceutically acceptable salts, esters, solvates and clathrates thereof.

Veterinary drugs may also be conveniently applied using the drug delivery device of the invention. Agricultural and horticultural agents include, for example orchid growth hormone, may also be delivered using the delivery device of the invention. It will be appreciated that use of drug delivery devices in veterinary and horticultural applications enables more exact dosing, and less waste than administration in the food/irrigation water.

The drug delivery system of the invention, in addition to the drug, may advantageously also contain an effective amount of a penetration enhancer. An effective amount of a penetration enhancer means an amount that provides a selected increase in membrane permeability, rate of administration and amount of drug.

The device of the invention is placed on the skin and allowed to remain for a time sufficient to achieve or maintain the intended therapeutic effect. The time that constitutes a sufficient time can be selected by those skilled in the art with consideration of the flux rate of the device of the invention and of the condition being treated.

The drug delivery devices of the invention can be made in the form of an article such as a tape, a patch, a sheet, a dressing or any other form known to those skilled in the art. The dosage system may be produced in any desirable unit form. A circular form is convenient as it contains no corners which might be easily detached from the skin. In addition to having various shapes, the dosage units produced may come in various sizes.

Depending on the design of the patch and the condition to be treated, the patch will remain on the skin for up to an hour or more, up to about one week. In a preferred embodiment, the patch is designed to remain on the skin at the application site for about 24 hours, and to be changed daily. Preferably, the patch will be placed on the skin at a site different from the location of the previously used patches.

The invention will be described further in the following examples, which are included for purposes of illustration and are not intended, in any way, to be limiting of the scope of the invention.

### EXAMPLES

### Sample preparation and coatings

All the formulations were prepared by either melt blending in a heated sigma blade mixer or by dissolution in ethyl acetate. Polymers

The polymers described in Table 1 were used to prepare the Sample formulations of the Examples.

ABCP1 and ABCP2 are block copolymers prepared by anionic polymerization, as described in Japanese Kokai No. 11-302617. ABCP1 is predominately triblock (>80%) and ABCP2 is a diblock material.

**Table 1**

| Block Copolymer | wt % Methyl Methacrylate | wt % n-Butyl Acrylate | Mw (g/mol) |
|---|---|---|---|
| ABCP1 | 31 | 69 | 160,000 |
| ABCP2 | 6.3 | 93.7 | 85,000 |

### Viscosity, Loop Tack, Peel, Shear, and SAFT testing

Viscosity was measured in a Brookfield viscometer. Adhesive films with a 2 mil thickness were made on release liner and then transferred to 2 mil PET. All bonds between adhesive and polished stainless steel plates (satin finish) were made by two passes of a 4.5 lb. roller at a rate of 12 in/min. 180° peel testing was performed with a 20 minute dwell on plates. Films (1" x 5") were pulled at a rate of 12 in/min. Shear testing included a 15 minute dwell on plates. A TMI Looptack Tester analyzed loop tack on 1" strips of adhesive. All testing conditions were 23°C and 50% relative humidity.

### Rheology

A Rheometrics Dynamic Mechanical Analyzer (Model RDA 700) was used to obtain the elastic (G') and loss (G") moduli versus temperature. The instrument was controlled by Rhios software version 4.3.2. Parallel plates 8 mm in diameter and separated by a gap of about 2 mm were used. The sample was loaded and then cooled to about -100°C and the test started. The program test increased the temperature at 5°C intervals followed by a soak time at each temperature of 10 seconds. The convection oven containing the sample was flushed continuously with nitrogen. The frequency was maintained at 10 rad/s. The initial strain at the start of the test was 0.05% (at the outer edge of the plates). An autostrain option in the software was used to maintain an accurately measurable torque throughout the test. The option was configured such that the maximum applied strain allowed by the software was 50%. The autostrain program adjusted the strain at each temperature increment if warranted using the following procedure. If the torque was below 200 g-cm the strain was increased by 25% of the current value. If the torque was above 1200 g-cm it was decreased by 25% of the current value. At torques between 200 and 1200 g-cm no change in strain was made at that temperature increment. The shear storage or elastic modulus (G') and the shear loss modulus (G") are calculated by the software from the torque and strain data. Their ratio, G"/G', also known as the tan delta, was also calculated.

### Example 1

An adhesive was prepared in solution containing 18% ABCP1, 10% ABCP2, 52% Kristalex 3085 (an alpha-methyl styrene tackifier from Eastman Chemical with a softening point of 85°C), and 20% of isopropyl myristate (an enhancer).

The solution viscosity was 3000 cP at 71.4% solids in ethyl acetate.

The sample was very soft exhibiting excellent finger tack. Peel was 11 oz/in on LDPE (low density polyethylene) and 17 oz/in on stainless steel. Shear was 8 hrs at a load of 500 g (1" x 1"). Adhesive patches applied to skin adhered well and were worn continuously for up to two days before removal.

### Example 2

An adhesive was prepared in the melt containing 26% ABCP1, 25% Sylvares TP 2040HM (a terpene phenolic tackifier available from Arizona Chemical Co.), 26% Norsolene A90 (a C9/C5 tackifier available from Sartomer), 23% di-tridecyl adipate and 0.5% Irganox 1010 (an antioxidant available from Ciba-Geigy).

The solution viscosity was 9450 cP at 60.4% solids in ethyl acetate.

The sample was very soft which promotes excellent wet-out on rough surfaces. Peel was 38 oz/in on HDPE (high density polyethylene) and 59 oz/in on stainless steel. Shear was 215 hrs (1/2" x 1" x 1 kg). SAFT was 240°F and loop tack was 75 oz. This adhesive has properties which make it suitable for use in industrial tape applications.

### Example 3

An adhesive was prepared from 18% ABCP1, 15% ABCP2, 42% Kristalex 3085, 25% Poly-G 20-28 (polypropylene glycol with MW 4000 available from Arch Chemical Co.), and 0.5% Irganox 1010.

The solution viscosity was 5050 cP at 71.4% solids in ethyl acetate.

The sample is very soft exhibiting excellent finger tack, high moisture vapor transmission rate, and good extended wear on skin (4 day study).

### Comparative Example 1

A 100% acrylic adhesive (DURO-TAK® 87-2516) prepared by conventional free-radical polymerization in solution and available from National Starch and Chemical Company was compared to adhesive formulations of the invention. This adhesive, which is commercially used for the transdermal delivery of drugs, has a viscosity of 4350 cP at 41.5% solids. With 20% isopropyl myristate (20% of the solids) it has a viscosity of 2715 cP at 47% solids.

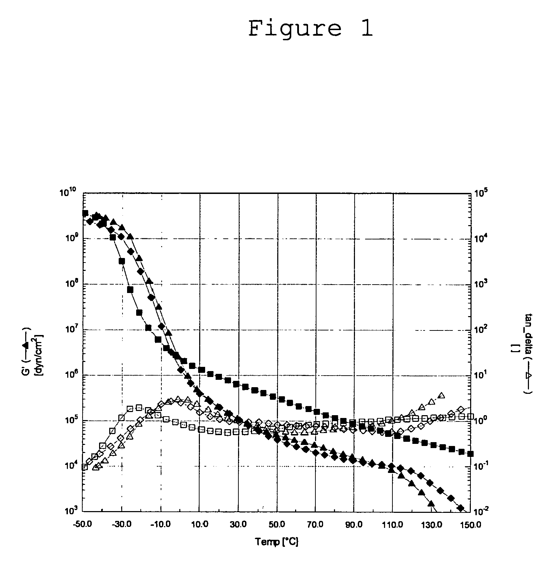

As can be seen in Figure 1 (modulus (G') curve), the prior art adhesive is much stiffer than the two skin adhesives of the invention (Examples 1 and 3) formulated from block acrylics. Softness translates into superior conformance to the texture of the skin. It is noted that similar rheology can be obtained with 20% enhancer (Example 1) or without (Example 3) by proper formulation of the product. Thus adhesives with the desired skin adhesion properties are obtained even at high levels of enhancer.

### Comparative Example 2

A 100% acrylic adhesive (DURO-TAK® 80-1068) prepared by conventional free-radical polymerization in solution and available from National Starch and Chemical Company was compared to an adhesive formulation of the invention. This adhesive is used commercially for industrial tape applications. Peel was 19 oz/in on HDPE (high density polyethylene) and 82 oz/in on stainless steel. Shear was 187 hrs (1/2" x 1" x 1 kg). SAFT was 305°F and loop tack was 59 oz.

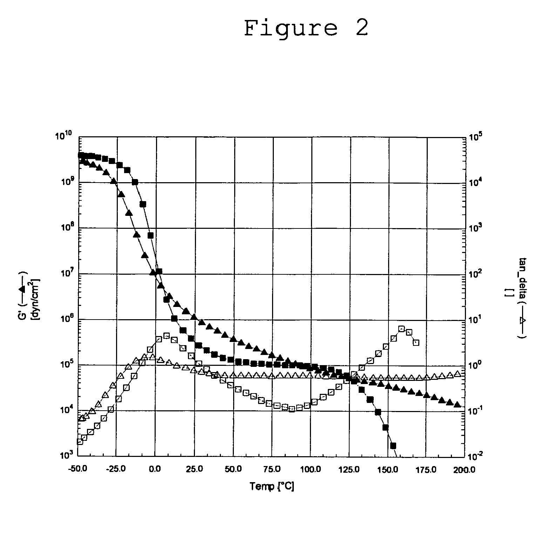

As can be seen in Figure 2 this prior art adhesive is considerably stiffer than the industrial tape adhesive formulated from a block acrylic in accordance with the invention (Example 2). It has a viscosity of 1800 cP at 43% solids.

Many modifications and variations of this invention can be made without departing from its spirit and scope, as will be apparent to those skilled in the art. The specific embodiments described herein are offered by way of example only, and the invention is to be limited only by the terms of the appended claims, along with the full scope of equivalents to which such claims are entitled.

## Claims

1. A solution of a pressure sensitive adhesive in an organic solvent, wherein the adhesive comprises an acrylic block copolymer, and wherein the acrylic block copolymer is present in the composition in amounts of less than about 50% by weight based on the total weight of the adhesive.

2. The solution of claim 1 wherein the adhesive composition comprises from about 20 to about 35 wt % of an acrylic block copolymer, from about 35 to about 80 wt % of a tackifier, and from about 10 to about 45 wt % of a diluent, and up to about 2 wt % of an antioxidant.

3. The solution of claim 1 with a viscosity of less than 10,000 cP at a solids content of greater than 50%.

4. The solution of claim 1 with a viscosity of less than 10,000 cP at a solids content of greater than 60%.

5. The solution of claim 1 with a viscosity of less than 10,000 cP at a solids content of greater than 70%.

6. A solution of a pressure sensitive adhesive dissolved in an organic solvent, wherein the adhesive comprises an acrylic block copolymer, a drug or cosmeceutical and, optionally, an enhancer.

7. A solution of a pressure sensitive adhesive in an organic solvent, wherein the adhesive comprises an acrylic block copolymer, and wherein the solids level is greater than 60% and the viscosity is less than 10,000 cP.

8. The solution of claim 7 wherein the solids level is greater than 70%.

9. The solution of claim 7 further comprising a drug or cosmeceutical and, optionally, an enhancer.

10. An article of manufacture prepared using the solution of claim 1.

11. The article of claim 10 which is an adhesive tape.

12. The article of claim 10 which is a medical tape.

13. The article of claim 10 which is a drug delivery device.

14. The article of claim 13 which is a transdermal drug delivery device.

15. The article of claim 13 which is a dermal drug delivery device.

16. The drug delivery device of claim 15 which is a cosmeceutical delivery device.

17. The article of claim 10 wherein the solution has a solids content of greater than about 70 %.

18. The article of claim 17 wherein the adhesive further comprises a drug.

19. The article of claim 18 wherein the adhesive further comprises an enhancer.

20. The article of claim 19 which is a drug delivery device.
